# EUROPÄISCHE PATENTSCHRIFT

(11) **EP 2 497 982 B1**
(45) Veröffentlichungstag und Bekanntmachung des Hinweises auf die Patenterteilung: **12.09.2018**
(21) Anmeldenummer: 12157627.6
(22) Anmeldetag: 01.03.2012
(51) Int. Cl.: F16K 15/06, F16K 27/02

(54) **Systemtrenner**
System separator
Séparateur de système

(30) Priorität: 11.03.2011 DE 102011013718
(43) Veröffentlichungstag der Anmeldung: 12.09.2012
(73) Patentinhaber: Honeywell Technologies Sarl, 1180 Rolle (CH)
(72) Erfinder: Friedrich, Pierre, 74862 Binau (DE); Tasser, Peter, 74842 Billigheim (DE)
(74) Vertreter: Sturm, Christoph

(56) Entgegenhaltungen:
- EP-A2- 1 350 896
- DE-C2- 4 204 386
- US-A- 3 401 436
- US-A- 4 284 097
- US-A- 5 181 535

## Beschreibung

Die Erfindung betrifft einen Systemtrenner nach dem Oberbegriff des Anspruchs 1.

Aus der DE 42 04 386 C2 ist ein Systemtrenner mit einem Gehäuse bekannt, dessen Gehäuse eine Einlasskammer, eine Zwischenkammer und eine Auslasskammer definiert, wobei der Systemtrenner weiterhin zwei in dem Gehäuse positionierte, in Durchflussrichtung eines Medium hintereinander geschaltete Rückflussverhinderer umfasst, nämlich einen ersten, einlassseitigen Rückflussverhinderer, der zwischen die Einlasskammer und die Zwischenkammer geschaltet ist, und einen zweiten, auslassseitigen Rückflussverhinderer, der zwischen die Zwischenkammer und die Auslasskammer geschaltet ist. Weiterhin umfasst der dort offenbarte Systemtrenner ein Ablassventil, mit welchem die Zwischenkammer zwischen den beiden Rückflussverhinderern belüftet oder entleert werden kann, wobei das Ablassventil abhängig von einem Differenzdruck zwischen dem Druck in der Einlasskammer und dem Druck in der Zwischenkammer gesteuert wird. Dann, wenn dieser Differenzdruck unter einen definierten Grenzwert absinkt, öffnet das Ablassventil, um die Zwischenkammer in die Atmosphäre zu belüften.

Die Rückflussverhinderer bekannter Systemtrenner umfassen jeweils einen Düsenkörper mit einem Ventilsitz, einen Ventilteller mit Dichtung und ein Federelement, wobei die vom Federelement bereitgestellte Federkraft den Ventilteller des jeweiligen Rückflussverhinderers gegen einen vom jeweiligen Düsenkörper bereitgestellten Ventilsitz drückt. Abhängig von der Druckdifferenz am jeweiligen Rückflussverhinderer ist der jeweilige Ventilteller vom Ventilsitz des jeweiligen Düsenkörpers abhebbar.

Bislang werden die Düsenkörper der im Gehäuse des Systemtrenners verbauten Rückflussverhinderer dadurch im Gehäuse des Systemtrenners gesichert, dass die Düsenkörper über ein Gewinde im Gehäuse des Systemtrenners verschraubt werden. Dieses Verschrauben der Düsenkörper der Rückflussverhinderer im Gehäuse des Systemtrenners verfügt über den Nachteil, dass dasselbe umständlich ist und große Kräfte erfordert.

Die US 4,284,097 A offenbart einen Rückflussverhinderer mit radial zusammnedrückbaren Sicherungsringen.

Der Erfindung liegt die Aufgabe zu Grunde, einen neuartigen Systemtrenner zu schaffen.

Diese Aufgabe wird durch einen Systemtrenner gemäß Anspruch 1 gelöst.

Die hier vorliegende Erfindung stellt eine einfache Sicherung der Düsenkörper der Rückflussverhinderer im Gehäuse des Systemtrenners ohne die Notwendigkeit der Verschraubung der Düsenkörper mit dem Gehäuse bereit. Daher werden zur Sicherung der Düsenkörper im Gehäuse des Systemtrenners geringere Kräfte benötigt.

Durch die erfindungsgemäße Ausgestaltung der ringförmigen, an einer Umfangsposition geteilten, axial auseinanderdrückbaren, durch Rotieren einfädelbaren und im Querschnitt plattenartigen Sicherungselemente ist nicht nur eine einfache Sicherung und Montage der Düsenkörper im Gehäuse des Systemtrenners möglich, weiterhin wird eine ausreichend große Kontaktfläche zwischen dem jeweiligen Sicherungselement und dem jeweiligen Düsenkörper bereitgestellt, um den jeweiligen Düsenkörper im Gehäuse des Systemtrenners sicher zu halten.

Vorzugsweise weist jedes ringförmige und im Querschnitt plattenartige Sicherungselement an jeder Umfangsposition eine größere Radialerstreckung als Axialerstreckung auf, wobei jedes ringförmige und im Querschnitt plattenartige Sicherungselement radial innen den Vorsprung des jeweiligen Düsenkörpers und radial außen die die jeweilige Nut des Gehäuses zur Zwischenkammer hin begrenzenden Wandung zumindest abschnittsweise überdeckt. Diese Ausgestaltung der ringförmigen und im Querschnitt plattenartigen Sicherungselemente erlaubt eine besonders bevorzugte Montage der Düsenkörper der Rückflussverhinderer im Gehäuse des Systemtrenners.

Nach einer vorteilhaften Weiterbildung der Erfindung ist im Bereich jedes Rückflussverhinderers zusätzlich zum ringförmigen und im Querschnitt plattenartigen Sicherungselement ein als Haltklammer ausgebildetes weiteres Sicherungselement vorgesehen. Über die zusätzlichen Halteklammern kann die Montage der Düsenkörper der Rückflussverhinderer im Gehäuse des Systemtrenners unterstützt werden.

Bevorzugte Weiterbildungen der Erfindung ergeben sich aus den Unteransprüchen und der nachfolgenden Beschreibung. Nachfolgend wird ein Ausführungsbeispiel der Erfindung, ohne hierauf beschränkt zu sein, anhand der Zeichnung näher erläutert. In der Zeichnung zeigt:
- Fig. 1: einen ausschnittsweisen Querschnitt durch ein Ausführungsbeispiel eines erfindungsgemäßen Systemtrenners;
- Fig. 2: eine ausschnittsweise perspektivische Darstellung des Systemtrenners der Fig.1;
- Fig. 3: ein Detail des Systemtrenners der Fig. 1 und 2;
- Fig. 4: die Darstellung der Fig. 1 zusammen mit einem weiteren Detail; und
- Fig. 5: die Darstellung der Fig. 2 ebenfalls zusammen mit dem weiteren Detail der Fig. 4.

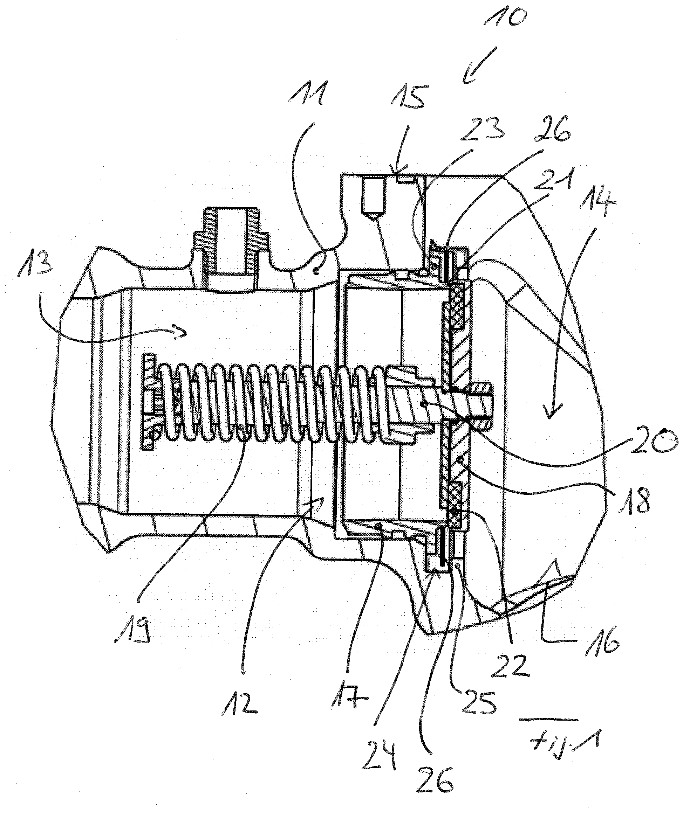

Fig. 1 zeigt einen ausschnittsweisen Querschnitt durch einzelne Baugruppen eines erfindungsgemäßen Systemtrenners 10, nämlich einen Querschnitt durch ein Gehäuse 11 des Systemtrenners 10 und einen Querschnitt durch einen im Gehäuse 11 des Systemtrenners 10 aufgenommenen bzw. positionierten einlassseitigen Rückflussverhinderer 12. Zusätzlich ist im Gehäuse 11 ein nicht gezeigter, auslassseitiger Rückflussverhinderer aufgenommenen.

Das Gehäuse 11 des erfindungsgemäßen Systemtrenners 10 stellt eine Einlasskammer 13, eine Zwischenkammer 14 und eine nicht gezeigte Auslasskammer bereitstellt, wobei die Rückflussverhinderer derart im Gehäuse 11 aufgenommen sind, dass der einlassseitige Rückflussverhinderer 12 zwischen der Einlasskammer 13 und der Zwischenkammer 14 positioniert ist, und dass der nicht gezeigte auslassseitige Rückflussverhinderer zwischen der Zwischenkammer 14 und der nicht gezeigten Auslasskammer des Systemtrenners 10 positioniert ist.

Der einlassseitige Rückflussverhinderer 12 ist demnach zwischen die Einlasskammer 13 und die Zwischenkammer 14 des Systemtrenners 10 geschaltet, wohingegen der auslassseitige Rückflussverhinderer zwischen die Zwischenkammer 14 und die Auslasskammer des Systemtrenners 10 geschaltet ist.

Obwohl in Fig. 1 nicht gezeigt, ist dem Gehäuse 10 ein Deckel zugeordnet, der mit einem Abschnitt 15 des Gehäuses 11 des Systemtrenners 10 verschraubt werden kann, um die Zwischenkammer 14 des Systemtrenners 10 an einer Seite des Gehäuses 11 zu verschließen.

Ferner verfügt ein Systemtrenner 10 über ein in Fig. 1 nicht gezeigtes Ablassventil, welches in montiertem Zustand in eine Öffnung 16 im Gehäuse 11 des Systemtrenners 10 eingesetzt ist und mit der Zwischenkammer 14 derart kommuniziert, dass die in Durchflussrichtung eines Mediums gesehen zwischen den beiden Rückflussverhinderern positionierte Zwischenkammer 14 über das nicht gezeigte Ablassventil belüftet werden kann.

Dabei ist es bereits bekannt, das in Fig. 1 nicht gezeigte Ablassventil abhängig von einem Differenzdruck zwischen dem Druck in der Einlasskammer 13 und dem Druck in der Zwischenkammer 14 gesteuert zu öffnen, nämlich derart, dass das Ablassventil zum Belüften der Zwischenkammer 14 in die Atmosphäre dann automatisch öffnet, wenn der Differenzdruck zwischen dem Druck in der Einlasskammer 13 und dem Druck in der Zwischenkammer 14 einen Grenzwert unterschreitet.

Die Rückflussverhinderer des erfindungsgemäßen Systemtrenners 10 verfügen jeweils über einen von einem Medium durchströmten Düsenkörper 17, einen Ventilteller 18, ein Federelement 19 sowie ein Tragelement 20, wobei am jeweiligen Tragelement 20 des jeweiligen Rückflussverhinderers der jeweilige Düsenkörper 17, der jeweilige Ventilteller 18 und das jeweilige Federelement 19 angreifen. Jeder Düsenkörper 17 stellt einen Ventilsitz 21 bereit.

Der jeweilige Ventilsitz 21 wirkt mit dem Ventilteller 20 des jeweiligen Rückflussverhinderers zusammen, nämlich mit einer von dem jeweiligen Ventilteller 20 aufgenommenen Dichtung 22.

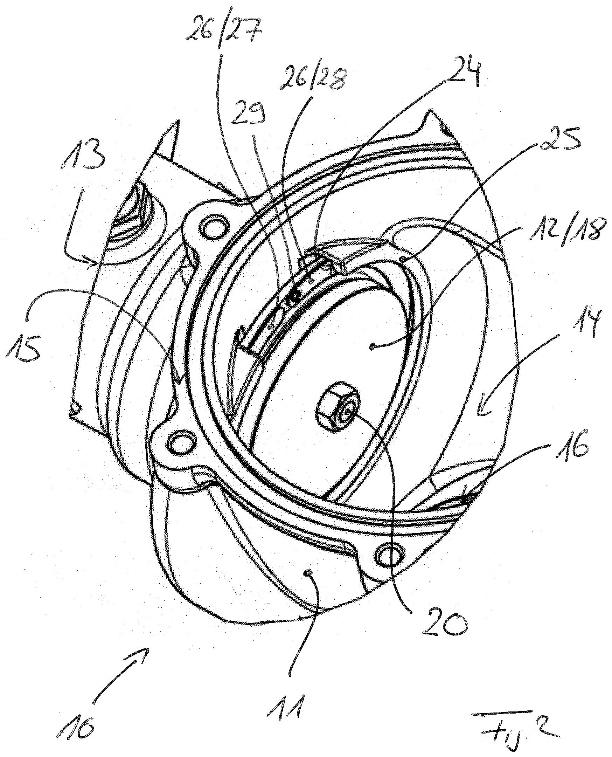

Jeder Düsenkörper 17 eines jeden Rückflussverhinderers umfasst radial außen einen Vorsprung 23. Dann, wenn der jeweilige Rückflussverhinderer im Gehäuse 11 des Systemtreners 10 montiert ist, ragt der jeweilige radial äußere Vorsprünge 23 des jeweiligen Düsenkörper 17 in eine jeweilige Nut 24 im Gehäuse 11 hinein. Die jeweilige Nut 24 ist (siehe insbesondere Fig. 2) an einer Umfangsposition unterbrochen bzw. radial offen und ringartig ausgeführt.

Der Düsenkörper 17 jedes Rückflussverhinderers ist in einer entsprechenden Nut 24 des Gehäuses 11 des Systemtrenners über mindestens ein Sicherungselement gesichert.

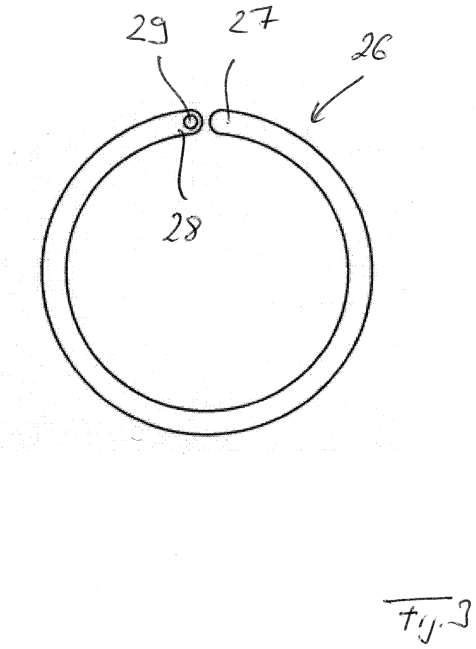

So zeigen Fig. 1 und 2 eine Variante der Erfindung, in welcher im Bereich jedes Rückflussverhinderers zwischen dem jeweiligen ringförmig umlaufenden Vorsprung 23 des jeweiligen Düsenkörpers 17 und einer die jeweilige Nut 24 des Gehäuses 11 des Systemtrenners 10 zur Zwischenkammer 14 hin begrenzenden Wandung 25 ein ringförmiges, an einer Umfangsposition geteiltes und im Querschnitt plattenartiges Sicherungselement 26 positioniert ist, welches in Fig. 3 in Alleindarstellung gezeigt ist.

Durch die Trennung bzw. Teilung des Sicherungselements 26 an einer Umfangsposition bildet dasselbe zwei einander benachbarte bzw. aneinander grenzende bzw. sich gegenüberliegende Enden 27 und 28 aus, die in Axialrichtung federelastisch auseinander gedrückt und damit aufgebogen werden können. In Umfangsrichtung und damit auch Radialrichtung ist das jeweilige Sicherungselement 26 auf Grund seiner plattenartigen Konturierung so gut wie nicht biegbar, nämlich weder aufbiegbar noch zusammendrückbar. Das Aufbiegen des Sicherungselements 26 erfolgt in Axialrichtung desselben.

Zum Einfädeln des Sicherungselements 26 in die Nut 24 zwischen dem Vorsprung 23 des Düsenkörpers 17 und der die Nut 24 zur Zwischenkammer 14 hin begrenzenden Wandung 14 ist das jeweilige Sicherungselement 26 axial aufbiegbar, nämlich durch axiales Auseinanderdrücken der bereits erwähnten, sich gegenüberliegenden Enden 27 und 28 des Sicherungselements 26, wobei nach dem axialen Auseinanderdrücken eines der Enden 27 bzw. 28 in die Nut 24 einfädelbar ist, und wobei durch anschließendes Rotieren bzw. Drehen des Sicherungselements 26 um eine in Axialrichtung desselben verlaufende Achse das Sicherungselement 26 vollständig in die Nut 24 eingefädelt werden kann.

So ist Fig. 3 an dem Ende 28 eine Ausnehmung 29 ausgebildet, die als Einfädelhilfe für das Einfädeln des Sicherungselements 26 in die Nut 24 dient. In diese Ausnehmung 29 kann zum Beispiel ein Werkzeug eingeführt werden, um das Sicherungselement 26 um die Axialrichtung zu drehen und so dasselbe vollständig in die Nut 24 einzufädeln.

Jedes ringförmige und im Querschnitt plattenartige Sicherungselement 26 weist an jeder Umfangsposition desselben eine größere Radialerstreckung als Axialerstreckung auf. Dies stellt im Vergleich zur Axialrichtung in Umfangsrichtung eine relativ hohe Steifigkeit des plattenartigen Sicherungselements 26 bereit, sodass dasselbe zwar in Axialrichtung jedoch nicht in Umfangsrichtung elastisch biegbar ist.

Jedes ringförmige und im Querschnitt plattenartige Sicherungselement 26 überdeckt radial innen den Vorsprung 23 des jeweiligen Düsenkörpers 17 und radial außen die die jeweilige Nut 24 des Gehäuses 11 zur Zwischenkammer 14 hin begrenzende Wandung 25 zumindest abschnittsweise. Hierdurch werden ausreichend große Kontaktflächen einerseits zwischen dem Sicherungselement 26 sowie dem Vorsprung 23 des Düsenkörpers 17 und andererseits zwischen dem Sicherungselement 26 sowie der Wandung 25 der Nut 24 bereitgestellt, um den jeweiligen Düsenkörper 17 des jeweiligen Rückflussverhinderers sicher und zuverlässig im Gehäuse 11 des Systemtrenners 10 zu montieren.

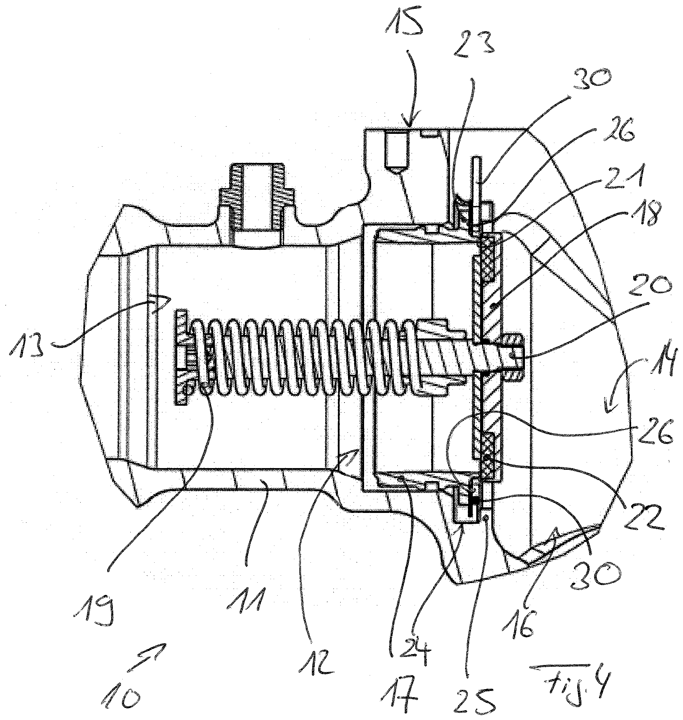

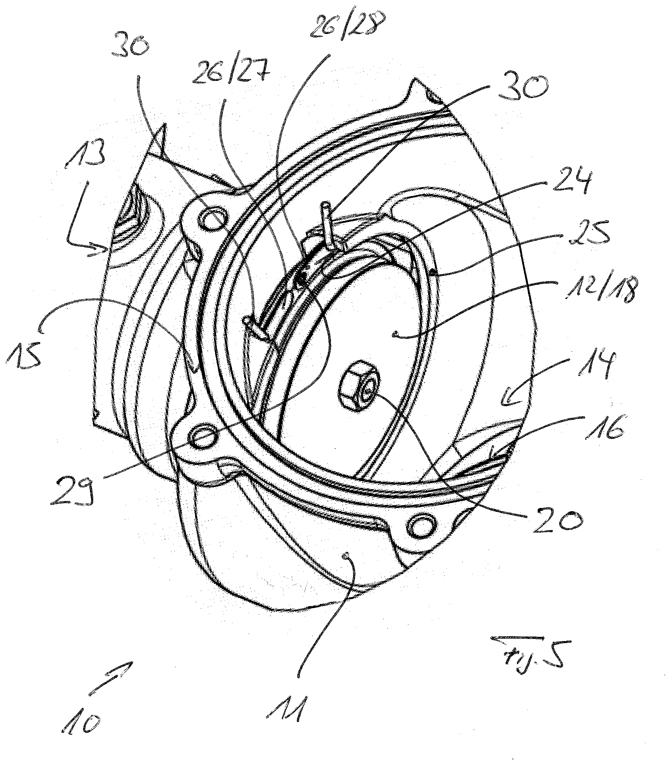

Fig. 4 und 5 zeigen eine Weiterbildung der Erfindung, in welcher im Bereich jedes Rückflussverhinderers zusätzlich zum bereits erwähnten, ringförmigen und im Querschnitt plattenartigen Sicherungselement 26 ein weiteres, als Halteklammer ausgebildetes Sicherungselement 30 vorgesehen ist, welches zwischen dem jeweiligen ringförmigen und im Querschnitt plattenartigen Sicherungselement 26 sowie der die jeweilige Nut 24 des Gehäuses 11 zur Zwischenkammer 14 hin begrenzenden Wandung 25 positioniert ist. Dieses als Halteklammer 30 ausgebildete weitere Sicherungselement ist ebenfalls ringartig und an einer Umfangsposition geteilt, jedoch im Querschnitt kreisrund ausgeführt, sodass die Axialerstreckung desselben der Radialerstreckung entspricht. Mit den Halteklammern 30 kann die Sicherung bzw. Montage der Düsenkörper 17 der Rückflussverhinderer im Gehäuse 11 des Systemtrenners 10 weiter verbessert werden.

Die im Querschnitt kreisrunden Sicherungselemente 30 bzw. Halteklammern sind demnach in Umfangsrichtung federelastisch biegbar. Zum Positionieren der Halteklammern in der jeweiligen Nut 24 des Gehäuses 11 werden dieselben in Umfangsrichtung an den sich gegenüberliegenden Enden der Halteklammern 30 zusammengedrückt, in die Nut 24 eingesetzt und dann losgelassen.

Die Erfindung erlaubt eine einfache und sichere Montage der Rückflussverhinderer, nämlich der Düsenkörper 17 derselben, im Gehäuse 11 des Systemtrenners 10 ohne Notwendigkeit großer Montagekräfte, wie dieselben beim Verschrauben der Düsenkörper im Gehäuse nach dem Stand der Technik erforderlich wären.

### Bezugszeichenliste

- 10: Systemtrenner
- 11: Gehäuse
- 12: einlassseitiger Rückflussverhinderer
- 13: Einlasskammer
- 14: Zwischenkammer
- 15: Abschnitt
- 16: Öffnung
- 17: Düsenkörper
- 18: Ventilteller
- 19: Federelement
- 20: Tragelement
- 21: Ventilsitz
- 22: Dichtung
- 23: Vorsprung
- 24: Nut
- 25: Wandung
- 26: Sicherungselement
- 27: Ende
- 28: Ende
- 29: Ausnehmung
- 30: Sicherungselement

## Patentansprüche

1. Systemtrenner,
mit einem eine Einlasskammer (13), eine Zwischenkammer (14) und eine Auslasskammer definierenden Gehäuse (11),
mit in dem Gehäuse positionierten, in Durchflussrichtung eines Mediums hintereinander geschalteten Rückflussverhinderern, nämlich einem ersten, zwischen die Einlasskammer (13) und die Zwischenkammer (14) geschalteten, einlassseitigen Rückflussverhinderer (12) und einem zweiten, zwischen die Zwischenkammer und die Auslasskammer geschalteten, auslassseitigen Rückflussverhinderer, und
mit einem die Zwischenkammer (14) zwischen den Rückflussverhinderern belüftenden Ablassventil, welches abhängig von einem Differenzdruck zwischen dem Druck in der Einlasskammer und dem Druck in der Zwischenkammer gesteuert ist,
wobei jeder Rückflussverhinderer einen Düsenkörper (17), einen Ventilteller (18) und ein Federelement (19) umfasst,
wobei der Düsenkörper (17) jedes Rückflussverhinderers radial außen einen in eine an einer Umfangsposition unterbrochene, ringförmige Nut (24) des Gehäuses (11) hinragenden und in der Nut (24) über ein mindestens ein Sicherungselement gesicherten, ringförmige umlaufenden Vorsprung (23) aufweist, und
wobei im Bereich jedes Rückflussverhinderers zwischen dem jeweiligen ringförmig umlaufenden Vorsprung (23) des jeweiligen Düsenkörpers (17) und einer die jeweilige Nut (24) des Gehäuses (11) zur Zwischenkammer (14) hin begrenzenden Wandung (25) ein ringförmiges, an einer Umfangsposition geteiltes und im Querschnitt plattenartiges Sicherungselement (26) positioniert ist,
**dadurch gekennzeichnet, dass**
zum Einfädeln des Sicherungselements (26) in die Nut zwischen dem Vorsprung (23) des Düsenkörpers und der die Nut zur Zwischenkammer (14) hin begrenzenden Wandung (25) das jeweilige Sicherungselement (26) axial aufbiegbar ist, nämlich durch axiales Auseinanderdrücken von durch die Umfangsteilung ausgebildeten Enden (27, 28) des Sicherungselements, wobei eines der durch axiales Auseinanderdrücken aufgebogenen Enden (27, 28) in die Nut einfädelbar ist, wobei durch anschließendes Rotieren des Sicherungselements (26) um eine in Axialrichtung desselben verlaufende Achse dasselbe vollständig in die Nut (24) einfädelbar ist.

2. Systemtrenner nach Anspruch 1, **dadurch gekennzeichnet, dass** an mindestens einem der durch die Umfangsteilung ausgebildeten Enden (27, 28) des jeweiligen Sicherungselements (26) eine als Einfädelhilfe dienende Ausnehmung (29) ausgebildet ist.

3. Systemtrenner nach Anspruch 1 oder 2, **dadurch gekennzeichnet, dass** jedes ringförmige und im Querschnitt plattenartige Sicherungselement (26) an jeder Umfangsposition eine größere Radialerstreckung als Axialerstreckung aufweist, wobei jedes ringförmige und im Querschnitt plattenartige Sicherungselement (26) radial innen den Vorsprung (23) des jeweiligen Düsenkörpers (17) und radial außen die die jeweilige Nut (24) des Gehäuses (11) zur Zwischenkammer (14) hin begrenzenden Wandung (25) zumindest abschnittsweise überdeckt.

4. Systemtrenner nach einem der Ansprüche 1 bis 3, **dadurch gekennzeichnet, dass** jedes ringförmige und im Querschnitt plattenartige Sicherungselement (26) in Umfangsrichtung eine relativ hohe und in Axialrichtung eine relativ geringe Steifigkeit aufweist, sodass dasselbe zwar in Axialrichtung jedoch nicht in Umfangsrichtung elastisch biegbar ist.

5. Systemtrenner nach einem der Ansprüche 1 bis 4, **dadurch gekennzeichnet, dass** im Bereich jedes Rückflussverhinderers zusätzlich zum ringförmigen und im Querschnitt plattenartigen Sicherungselement (26) ein als Haltklammer ausgebildetes weiteres Sicherungselement (30) vorgesehen ist.

6. Systemtrenner nach Anspruch 5, **dadurch gekennzeichnet, dass** jede Halteklammer (30) ebenfalls ringförmig und an einer Umfangsposition geteilt jedoch im Querschnitt kreisrund ausgebildet ist, sodass die Radialerstreckung der Axialerstreckung entspricht.

7. Systemtrenner nach Anspruch 5 oder 6, **dadurch gekennzeichnet, dass** jede Halteklammer (30) in Umfangsrichtung und in Axialrichtung jeweils eine relativ geringe Steifigkeit aufweist, sodass dieselben sowohl in Umfangsrichtung als auch in Axialrichtung elastisch biegbar sind.

8. Systemtrenner nach einem der Ansprüche 5 bis 7, **dadurch gekennzeichnet, dass** jede Halteklammer (30) zwischen dem ringförmigen und im Querschnitt plattenartigen Sicherungselement (26) sowie der die jeweilige Nut (24) des Gehäuses (11) zur Zwischenkammer (14) hin begrenzenden Wandung (25) positioniert ist.

## Claims

1. System separator
having a housing (11) defining an inlet chamber (13), an intermediate chamber (14) and an outlet chamber,
having backflow preventers positioned in the housing and connected one after another in the flow direction of a medium, specifically a first, inlet-side backflow preventer (12) connected between the inlet chamber (13) and the intermediate chamber (14), and a second, outletside backflow preventer connected between the intermediate chamber and the outlet chamber, and
having an outlet valve venting the intermediate chamber (14) between the backflow preventers, which is controlled on the basis of a differential pressure between the pressure in the inlet chamber and the pressure in the intermediate chamber,
each backflow preventer comprising a nozzle body (17), a valve disc (18) and a spring element (19),
the nozzle body (17) of each backflow preventer having, radially on the outside, an annular circumferential projection (23) which projects into an annular groove (24) of the housing (11) that is interrupted at one circumferential position and which is secured in the groove (24) via at least one securing element, and
an annular securing element (26) that is plate-like in cross section and is divided at one circumferential position being positioned in the region of each backflow preventer, between the respective annularly circumferential projection (23) of the respective nozzle body (17) and a wall (25) delimiting the respective groove (24) of the housing (11) with respect to the intermediate chamber (14),
**characterized in that**
to thread the securing element (26) into the groove between the projection (23) of the nozzle body and the wall (25) delimiting the groove with respect to the intermediate chamber (14), the respective securing element (26) can be bent up axially, namely by means of axially forcing apart ends (27, 28) of the securing element that are formed by the circumferential division, wherein one of the ends (27, 28) bent up by being axially forced apart can be threaded into the groove, wherein, by means of subsequent rotation of the securing element (26) about an axis extending in the axial direction of the same, the same can be threaded completely into the groove (24).

2. System separator according to Claim 1, **characterized in that** a cut-out (29) used as a threading aid is formed at at least one of the ends (27, 28) of the respective securing element (26) that are formed by the circumferential division.

3. System separator according to Claim 1 or 2, **characterized in that** each annular securing element (26) of plate-like cross section has a greater radial extent than axial extent at each circumferential position, wherein each annular securing element (26) of plate-like cross section covers the projection (23) of the respective nozzle body (17) radially on the inside and, radially on the outside, covers at least some sections of the wall (25) delimiting the respective groove (24) of the housing (11) with respect to the intermediate chamber (14).

4. System separator according to one of Claims 1 to 3, **characterized in that** each annular securing element (26) of plate-like cross section has a relatively high stiffness in the circumferential direction and a relatively low stiffness in the axial direction, so that the same can be bent elastically in the axial direction but not in the circumferential direction.

5. System separator according to one of Claims 1 to 4, **characterized in that** in the region of each backflow preventer, in addition to the annular securing element (26) of plate-like cross section, a further securing element (30) formed as a retaining clip is provided.

6. System separator according to Claim 5, **characterized in that** each retaining clip (30) is likewise formed annularly and divided at one circumferential position but circularly in cross section, so that the radial extent corresponds to the axial extent.

7. System separator according to Claim 5 or 6, **characterized in that** each retaining clip (30) has a relatively low stiffness in the circumferential direction and in the axial direction respectively, so that the same are elastically flexible both in the circumferential direction and in the axial direction.

8. System separator according to one of Claims 5 to 7, **characterized in that** each retaining clip (30) is positioned between the annular securing element (26) of plate-like cross section and the wall (25) delimiting the respective groove (24) of the housing (11) with respect to the intermediate chamber (14).

## Revendications

1. Séparateur de système, comprenant :
un boîtier (11) définissant une chambre d'entrée (13), une chambre intermédiaire (14) et une chambre de sortie,
des dispositifs antireflux positionnés dans le boîtier, montés les uns derrière les autres dans la direction d'écoulement d'un fluide, à savoir un premier dispositif antireflux côté entrée (12), monté entre la chambre d'entrée (13) et la chambre intermédiaire (14), et un deuxième dispositif antireflux côté sortie, monté entre la chambre intermédiaire et la chambre de sortie, et
une soupape d'échappement ventilant la chambre intermédiaire (14) entre les dispositifs antireflux, qui est commandée en fonction d'une pression différentielle entre la pression dans la chambre d'entrée et la pression dans la chambre intermédiaire,
chaque dispositif antireflux comprenant un corps de buse (17), un plateau de soupape (18) et un élément de ressort (19),
le corps de buse (17) de chaque dispositif antireflux présentant, radialement à l'extérieur, une saillie périphérique annulaire (23) pénétrant dans une rainure annulaire (24) du boitier (11) interrompue au niveau d'une position périphérique, et fixée dans la rainure (24) par le biais d'au moins un élément de fixation, et
un élément de fixation (26) de forme annulaire, divisé au niveau d'une position périphérique et de section transversale en forme de plaque étant positionné dans la région de chaque dispositif antireflux entre la saillie périphérique annulaire respective (23) de chaque corps de buse (17) et une paroi (25) limitant la rainure respective (24) du boîtier (11) vers la chambre intermédiaire (14),
**caractérisé en ce que**
pour enfiler l'élément de fixation (26) dans la rainure entre la saillie (23) du corps de buse et la paroi (25) limitant la rainure vers la chambre intermédiaire (14), l'élément de fixation respectif (26) peut être fléchi axialement, à savoir par écartement axial des extrémités (27, 28) de l'élément de fixation réalisées par la division périphérique, l'une des extrémités (27, 28) courbées par l'écartement axial pouvant être enfilée dans la rainure, et par rotation subséquente de l'élément de fixation (26) autour d'un axe s'étendant dans sa direction axiale, celui-ci pouvant être enfilé complètement dans la rainure (24).

2. Séparateur de système selon la revendication 1, **caractérisé en ce qu'**au niveau d'au moins l'une des extrémités (27, 28), réalisées par la division périphérique, de l'élément de fixation respectif (26), est réalisé un évidement (29) servant d'auxiliaire d'enfilement.

3. Séparateur de système selon la revendication 1 ou 2, **caractérisé en ce que** chaque élément de fixation (26) de forme annulaire et de section transversale en forme de plaque présente au niveau de chaque position périphérique une plus grande étendue radiale que l'étendue axiale, chaque élément de fixation (26) de forme annulaire et de section transversale en forme de plaque recouvrant au moins en partie radialement à l'intérieur la saillie (23) du corps de buse respectif (17) et radialement à l'extérieur la paroi (25) limitant la rainure respective (24) du boîtier (11) vers la chambre intermédiaire (14).

4. Séparateur de système selon l'une quelconque des revendications 1 à 3, **caractérisé en ce que** chaque élément de fixation (26) de forme annulaire et de section transversale en forme de plaque présente, dans la direction périphérique, une rigidité relativement élevée et, dans la direction axiale, relativement faible, de telle sorte que celui-ci puisse fléchir élastiquement dans la direction axiale mais pas dans la direction périphérique.

5. Séparateur de système selon l'une quelconque des revendications 1 à 4, **caractérisé en ce que** dans la région de chaque dispositif antireflux est prévu, en plus de l'élément de fixation (26) de forme annulaire et de section transversale en forme de plaque, un élément de fixation supplémentaire (30) réalisé sous forme de pince de retenue.

6. Séparateur de système selon la revendication 5, **caractérisé en ce que** chaque pince de retenue (30) est également réalisée sous forme annulaire et divisée au niveau d'une position périphérique, mais de section transversale ronde circulaire de telle sorte que l'étendue radiale correspondre à l'étendue axiale.

7. Séparateur de système selon la revendication 5 ou 6, **caractérisé en ce que** chaque pince de retenue (30) présente dans la direction périphérique et dans la direction axiale à chaque fois une relativement faible rigidité de sorte que celle-ci puisse être fléchie élastiquement à la fois dans la direction périphérique et dans la direction axiale.

8. Séparateur de système selon l'une quelconque des revendications 5 à 7, **caractérisé en ce que** chaque pince de retenue (30) est positionnée entre l'élément de fixation (26) de forme annulaire et de section transversale en forme de plaque et la paroi (25) limitant la rainure respective (24) du boîtier (11) vers la chambre intermédiaire (14).
